(19) Europäisches Patentamt
European Patent Office
Office européen des brevets

(11) **EP 1 208 637 B1**

(12) **EUROPÄISCHE PATENTSCHRIFT**

(45) Veröffentlichungstag und Bekanntmachung des Hinweises auf die Patenterteilung:
**23.07.2014 Patentblatt 2014/30**

(21) Anmeldenummer: **01936416.5**

(22) Anmeldetag: **01.06.2001**

(51) Int Cl.:
*H02P 7/285* (2006.01)     *E05F 15/16* (2006.01)
*H02P 7/00* (2006.01)      *H02P 7/29* (2006.01)
*G01P 3/48* (2006.01)

(86) Internationale Anmeldenummer:
**PCT/EP2001/006217**

(87) Internationale Veröffentlichungsnummer:
**WO 2001/095472 (13.12.2001 Gazette 2001/50)**

(54) **VERFAHREN ZUM BESTIMMEN DER DREHSTELLUNG DER ANTRIEBSWELLE EINES GLEICHSTROMMOTORS**

METHOD FOR DETERMINING THE ROTATIONAL POSITION OF THE DRIVE SHAFT OF A DIRECT CURRENT MOTOR

PROCEDE POUR LA DETERMINATION DE LA POSITION DE ROTATION DE L'ARBRE D'ENTRAINEMENT D'UN MOTEUR A COURANT CONTINU

(84) Benannte Vertragsstaaten:
**DE ES FR GB IT**

(30) Priorität: **06.06.2000 DE 10028035**

(43) Veröffentlichungstag der Anmeldung:
**29.05.2002 Patentblatt 2002/22**

(73) Patentinhaber: **Leopold Kostal GmbH & Co. KG
58507 Lüdenscheid (DE)**

(72) Erfinder: **OTTE, Stefan
58452 Witten (DE)**

(56) Entgegenhaltungen:
DE-A- 4 135 873     DE-A- 4 217 265
DE-C1- 19 729 238   DE-C1- 19 855 996

**Beschreibung**

Die Erfindung betrifft ein Verfahren zum Bestimmen der Drehstellung der Antriebswelle eines Gleichstrommotors durch Auswerten der im Ankerstromsignal enthaltenen Stromrippel.

Das Ankerstromsignal eines Gleichstrommotors umfaßt einen sogenannten Gleichanteil sowie einen den Gleichanteil überlagernden Wechselanteil. Der Wechselanteil entsteht bei einem Betrieb des Gleichstrommotors infolge des Zusammenwirkens von Magnet (Feld), Ankerwicklung und Kommutator des Gleichstrommotors. Dies äußert sich in einer kurzzeitigen Änderung der induzierten Spannung, woraus sich die Welligkeit des Ankerstromsignals ergibt. Die in dem Ankerstromsignal enthaltenen Stromspitzen - im folgenden Stromrippel genannt - treten bei einer Umdrehung des Ankers in einer der Anzahl der Kollektorlamellen entsprechenden Häufigkeit auf. Weist beispielsweise der Anker 10 Kollektorlamellen auf, sind im Ankerstromsignal entsprechend 10 Stromrippel zu erkennen. Eine Zählung der Stromrippel kann somit Aufschluß über die aktuelle Drehstellung des Ankers des Gleichstrommotors und somit auch bezüglich eines von diesem angetriebenen Elements innerhalb einer vorbestimmten Bewegungsstrecke geben. Zu diesem Zweck wird das analoge Ankerstromsignal digitalisiert, um eine entsprechende Zählung vornehmen zu können.

Eingesetzt werden derartige Verfahren beispielsweise im Kraftfahrzeugbereich zum Steuern eines Verstellantriebes, wie sie beispielsweise für Fensterheber und/oder Schiebedächer vorgesehen sind. Ein wesentliches Element in der Erfassung der Position beispielsweise der Scheibe ist diejenige beim Schließen derselben, bei der der Einklemmschutz abgeschaltet werden kann. Eine solche Abschaltung ist notwendig, damit die Scheibe vollständig in ihren oberen Block und in die dort vorgesehenen Dichtungen einfahren kann, ohne daß infolge der erhöhten Last eine Motorabschaltung erfolgt. Bei einer fehlerhaften Zählung der Stromrippel zur Bestimmung der Position der Scheibe kann es vorkommen, daß der Einklemmschutz zu früh oder zu spät abgeschaltet wird.

Ungenauigkeiten in einer exakten Positionsbestimmung ergeben sich bei einem solchen Verfahren jedoch durch den Motoranlauf bei einer Bestromung des Gleichstrommotors sowie beim Motorauslauf bei einem Abschalten desselben. Diese Ungenauigkeiten liegen darin begründet, daß bei einem Motorstart erst nach einer bestimmten Ankerdrehbewegung des Gleichstrommotors ein erster Stromrippel detektierbar ist. Entsprechendes gilt beim Motorauslauf, wobei bei herkömmlichen Verfahren eine Stromrippeldetektion nach der Abschaltung des Gleichstrommotors nicht möglich ist und somit die Ankerbewegung in der Motorauslaufphase in die Positionsbestimmung nicht eingehen kann.

Die DE 197 29 238 C1 zeigt ein Verfahren zum Bestimmen der Drehstellung der Antriebswelle eines Gleichstrommotors durch Auswerten der im Ankerstromsignal enthaltenen Stromrippel gemäß dem Oberbegriff des Patentanspruchs 1.

DE 198 55 996 C1 offenbart ein Verfahren zur Erkennung der Position eines Gleichstrommotors mittels eines einkanaligen Hall-Sensors. Um bei diesem Verfahren eine korrekte Zuordnung der Drehrichtung zu den erfassten Hall-Signalen auch bei abgeschalteter äußerer Motorbetriebsspannung zu ermöglichen, wird in diesem Falle die Generatorspannung bzw. der Generatorstrom gemessen, aus deren jeweiligen Werten sich die Drehrichtung des Motors unmittelbar entnehmen lässt.

Ausgehend von diesem diskutierten Stand der Technik liegt der Erfindung daher die Aufgabe zugrunde, das eingangs genannte gattungsgemäße Verfahren dergestalt weiterzubilden, daß eine Positionserfassung mit einer höheren Genauigkeit möglich ist.

Diese Aufgabe wird erfindungsgemäß gelöst durch ein Verfahren mit den Merkmalen des Patentanspruchs 1.

Beim Gegenstand des Anspruchs des Verfahrens geht auch derjenige Bewegungsanteil des Ankers des Gleichstrommotors mit in die Auswertung des Zählergebnisses ein, bei dem beim Motorstart noch kein Stromrippel detektierbar ist. Dies ist beispielsweise derjenige Drehwinkelbetrag, um den sich der Anker drehen muß, damit ein erster Stromrippel gebildet wird. Dieser Drehwinkelbetrag ist grundsätzlich kleiner als der Drehwinkelabstand zweier aufeinander folgender Stromrippel. Daher kann in dieser ersten Anlaufphase des Gleichstrommotors bis zu der Detektion des ersten Stromrippels der Anker lediglich um einen Drehwinkelbetrag bewegt worden sein, der kleiner ist als die einem Stromrippel zuzurechnenden Periode. Zur Abschätzung wie groß der Stromrippelanteil in dieser ersten Motoranlaufphase bis zur Detektion des ersten Stromrippels ist, erfolgt zunächst eine Bestimmung derjenigen Zeitspanne, die sich zwischen der Bestromung und somit dem Einschalten des Gleichstrommotors und der ersten Stromrippeldetektion erstreckt. In einem nachfolgenden Schritt erfolgt eine Abschätzung des der Zeitspanne entsprechenden Stromrippelanteils unter Zugrundelegung von Kenngrößen tatsächlich detektierter Stromrippel. Ähnlich wird bei einem Motorstop bzw. bei einem Abschalten des Gleichstrommotors verfahren, wobei in einem ersten Schritt bei seiner Abschaltung der Gleichstrommotor in einen Generatorbetrieb umgeschaltet wird. Durch Umschalten des Gleichstrommotors in seinen Generatorbetrieb ist durch den auslaufenden Anker weiterhin eine Stromrippeldetektion möglich. Wie auch beim Motoranlaufen erfolgt bei einem Ausschalten des Gleichstrommotors eine Bestimmung derjenigen Zeitspanne, die sich zwischen der Detektion des letzten Stromrippels und dem Stillstand des Ankers erstreckt, woran sich die Abschätzung des dieser Zeitspanne entsprechenden Stromrippelanteils anschließt.

Eine Abschätzung des jeweiligen Stromrippelanteils in der Motoranlauf- und Motorauslaufphase ist ausreichend, um die gewünschte Positionserfassung hinreichend bestimmt gestalten zu können. Ferner ist bei einer solchen Abschätzung von Vorteil, daß mit vereinfachten Randbedingungen gearbeitet werden kann, so daß der Aufwand, insbesondere die an eine Auswerteeinheit, beispielsweise ein Mikroprozessor zu stellenden Anforderungen nur gering sind.

Zweckmäßigerweise erfolgt eine Ermittlung der beiden Stromrippelanteile durch einen Vergleich zwischen der Periodendauer jeweils eines vorbestimmten, einer Zeitspanne - Motoranlaufphase oder Motorauslaufphase - zugeordneten, detektierten Referenzstromrippels. In diesen Vergleich gehen die relevanten Motorkenndaten als Konstante ein, wobei beispielsweise vorgesehen sein kann, daß in den in Rede stehenden Zeitspannen konstante Lastverhältnisse vorliegen. Als Referenzstromrippel zum Durchführen der Ermittlung des Stromrippelanteils während der Motoranlaufphase bis zur Dektektion des ersten Stromrippels wird zweckmäßigerweise ein solcher herangezogen, der eine bestimmte Anzahl an Stromrippeln nach dem ersten erfaßten Stromrippel detektiert wird. Dies erfolgt, um Detektionsfehler in der Motoranlaufphase auch nach der Detektion des ersten Stromrippels nicht in die Bestimmung des Stromrippelanteils mit einzubeziehen. Für die Stromrippelanteilsbestimmung in der Motorauslauf bezogenen Zeitspanne wird zweckmäßigerweise als Referenzstromrippel derjenige herangezogen, der zuletzt vor der Motorab- bzw. -umschaltung detektiert worden ist.

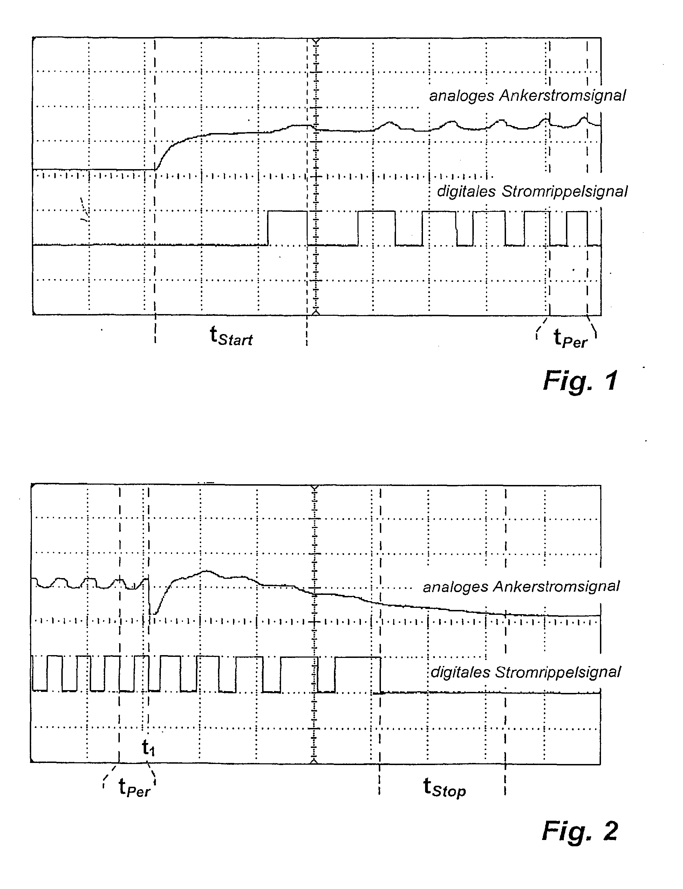

Figur 1 zeigt ein Diagramm darstellend das analoge gefilterte Ankerstromsignal und darunter das aus dem Ankerstromsignal abgeleitete digitale Stromrippelsignal. Gekennzeichnet ist ferner diejenige Phase während des Motoranlaufs $t_{Start}$, für die die Stromrippelanteilsbestimmung durchgeführt werden soll. Erkennbar ist auch diejenige Periode $t_{Per}$, die als Referenzstromrippel eingesetzt wird, um die gewünschte Stromrippelanteilsbestimmung durchführen zu können.

Die Ermittlung, wie groß der Stromrippelanteil in der ersten Zeitspanne $t_{Start}$ ist, kann beispielsweise auf folgende Weise ermittelt werden:

$$Stromrippelanteil = \frac{t_{Start} \cdot k}{t_{Per}}$$

wobei k die Motorkenndatenkonstante und $t_{Per}$ die Periode des Referenzstromrippels ist.

Figur 2 zeigt ein entsprechendes Diagramm wiedergebend das analoge gefilterte Ankerstromsignal und die daraus bestimmten Stromrippel bei einem Motorstop. Im Zeitpunkt $t_1$ wird der Gleichstrommotor in seinen Generatorbetrieb umgeschaltet, so daß in der Motorauslaufphase zunächst noch Stromrippel im Ankerstromsignal detektierbar sind. In der letzten Phase - in dieser Figur mit $t_{Stop}$ bezeichnet - ist zwar noch eine gewisse Drehbewegung des Ankers, jedoch keine Stromrippel mehr detektierbar. Zur Abschätzung wieviel Stromrippelanteile diese letzte Drehbewegung des Ankers entspricht, wird als Referenzstromrippel der zuletzt bei bestromten Motor detektierte herangezogen und die Periode $t_{Per}$ daraus bestimmt. Wie auch bei der Bestimmung des Stromrippelanteils in der Motoranlaufphase $t_{Start}$ erfolgt auf analoge Art und Weise die Bestimmung des Stromrippelanteils in dieser Motorauslauf bezogenen Zeitspanne $t_{Stop}$, wobei auch bei dieser Bestimmung von konstanten relevanten Motorkenndaten, beispielsweise der Last ausgegangen wird. Die Abschätzung kann entsprechend der nachfolgend wiedergegebenen Formel erfolgen

$$Stromrippelanteil' = \frac{t_{Stop} \cdot k}{t_{Per}}$$

wobei k wiederum die die relevanten Motorkenndaten enthaltene Konstante ist.

Aus der Darstellung der Erfindung wird deutlich, daß mit dem erfindungsgemäßen Verfahren Ungenauigkeiten reduziert sind, die sich dadurch ergeben, daß beim Motoranlauf bzw. beim Motorstop zu einem bestimmten Anteil eine Drehbewegung des Ankers des Gleichstrommotors erfolgt, ohne daß ein Stromrippel generiert und detektiert werden kann. Die Stromrippelanteile können beispielsweise in einem eigenen Zähler berücksichtigt werden, wobei dieser Zähler einen Zählimpuls an dem eigentlichen Stromrippelzähler weitergibt, wenn dieser ein ganzteiliges Ergebnis aufweist.

**Patentansprüche**

1. Verfahren zum Bestimmen der Drehstellung der Antriebswelle eines Gleichstrommotors durch Auswerten der im Ankerstromsignal enthaltenen Stromrippel, die bei einer Umdrehung des Ankers in einer der Anzahl der Kollektorlamellen entsprechenden Häufigkeit auftreten, **gekennzeichnet durch,**

• eine Bestimmung der zwischen der Bestromung des Gleichstrommotors und der Detektion des ersten Stromrippels liegenden ersten Zeitspanne $t_{Start}$,

• eine Bestimmung der zwischen der Detektion des letzten Stromrippels und dem Stillstand des Ankers des Gleichstrommotors liegenden zweiten Zeitspanne $t_{Stop}$, wobei bei einer Abschaltung des Gleichstrommotors dieser in einen Generatorbetrieb zur weiteren Stromrippeldetektion umgeschaltet wird,

• eine Bestimmung eines der ersten Zeitspanne $t_{Start}$ entsprechenden Stromrippelanteils gemäß der Beziehung

$$Stromrippelanteil = \frac{t_{Start} \cdot k}{t_{Per}}$$

• eine Bestimmung eines der zweiten Zeitspanne $t_{Stop}$ entsprechenden Stromrippelanteils gemäß der Beziehung

$$Stromrippelanteil = \frac{t_{Stop} \cdot k}{t_{Per}}$$

wobei $t_{Per}$ eine einem Referenzstromrippel zuzurechnende Periodendauer ist, wobei für die erste Zeitspanne $t_{Start}$ als Referenzstromrippel ein bestimmter, nach der Detektion des ersten Stromrippels detektierter Stromrippel herangezogen wird, wobei für die zweite Zeitspanne $t_{Stop}$ als Referenzstromrippel der vor der Motorab- bzw. - umschaltung zuletzt detektierte Stromrippel herangezogen wird, und wobei relevante Motorkenndaten als Konstante k berücksichtigt werden, und

• eine Einbeziehung der Stromrippelanteile in die Auswertung der Stromrippelzählung.

## Claims

1. Process for determining the rotational position of the drive shaft of a direct current motor by evaluating the current ripples incorporated in the armature current signal which occur in a frequency relevant to the number of collector segments when the armature rotates, **characterised by**

• a determination of the first time span $t_{Start}$ which lies between the energisation of the direct current motor and the detection of the first current ripple,

• a determination of the second time span $t_{Stop}$ which lies between the detection of the last current ripple and the standstill of the armature of the direct current motor, whereby, when the direct current motor is switched off, it is switched over to a generator mode for further current ripple detection,

• a determination of a portion of the current ripple corresponding to the first time span $t_{Start}$ according to the relationship

$$\text{Current ripple portion} = \frac{t_{Start} \cdot k}{t_{Per}}$$

• a determination of a portion of the current ripple corresponding to a second time span $t_{Stop}$ according to the relationship

$$\text{Current ripple portion} = \frac{t_{Stop} \cdot k}{t_{Per}}$$

for which purpose $t_{Per}$ is a period to be added to a reference current ripple, with a specific current ripple detected subsequent
to the detection of the first current ripple being used as a reference current ripple for the first time span $t_{Start}$, with the last current ripple detected prior to the motor being switched off or switched over being used as a reference current ripple for the second time span $t_{Stop}$, and with relevant motor characteristic data being taken into account as the constant k, and
• an incorporation of the portions of the current ripple in the evaluation of the current ripple reckoning.

**Revendications**

1. Procédé pour la détermination de la position de rotation de l'arbre d'entraînement d'un moteur à courant continu par évaluation des ondulations de courant contenues dans le signal de courant d'induit, qui se produisent à une fréquence correspondant au nombre des lamelles du collecteur, **caractérisé par**

. une détermination de la première période de temps $t_{Start}$ qui s'écoule entre la mise sous courant du moteur à courant continu et la détection de la première ondulation de courant,
. une détermination de la deuxième période de temps $t_{Stop}$ qui s'écoule entre la détection de la dernière ondulation de courant et l'arrêt de l'induit du moteur à courant continu, sachant que, lors d'un arrêt du moteur à courant continu, celui-ci est commuté en fonctionnement de générateur pour la détection d'autres ondulations de courant,
. une détermination d'une part d'ondulations de courant correspondant à la première période de temps selon la relation

$$\text{Part d'ondulations de courant} = \frac{t_{Start} \cdot k}{t_{Per}}$$

. une détermination d'une part d'ondulations de courant correspondant à la deuxième période de temps selon la relation

$$\text{Part d'ondulations de courant} = \frac{t_{Stop} \cdot k}{t_{Per}}$$

sachant que $t_{Per}$ est une durée de période allant au compte d'une ondulation de courant, une certaine ondulation de courant, détectée après la détection de la première ondulation de courant, étant utilisée en tant qu'ondulation de courant de référence, sachant que, pour la deuxième période de temps $t_{Stop}$, on utilise, comme ondulation de courant de référence, l'ondulation de courant détectée en dernier lieu avant l'arrêt ou la commutation du moteur, et d'importantes données caractéristiques du moteur étant prises en considération en tant que constante k, et
. une prise en considération des parts d'ondulations de courant dans l'évaluation du comptage des ondulations de courant.

analoges Ankerstromsignal

digitales Stromrippelsignal

$t_{Start}$

$t_{Per}$

**Fig. 1**

analoges Ankerstromsignal

digitales Stromrippelsignal

$t_1$

$t_{Per}$

$t_{Stop}$

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19729238 C1
- DE 19855996 C1